**Europäisches Patentamt**

**European Patent Office**

**Office européen des brevets**

(11) Veröffentlichungsnummer: **0 215 353**
**A2**

(12) # EUROPÄISCHE PATENTANMELDUNG

(21) Anmeldenummer: 86111921.2

(51) Int. Cl.4: **B23B 31/16**

(22) Anmeldetag: 28.08.86

(30) Priorität: 17.09.85 DE 3533078

(43) Veröffentlichungstag der Anmeldung:
25.03.87 Patentblatt 87/13

(84) Benannte Vertragsstaaten:
AT BE CH FR GB IT LI SE

(71) Anmelder: **Gildemeister AG**
**Morsestrasse 1**
**D-4800 Bielefeld(DE)**

(72) Erfinder: **Kuska, Joachim**
**Ringstrasse 53**
**D-3050 Wunstorf(DE)**
Erfinder: **Schaefer, Wolfgang**
**Eifelweg 2**
**D-3012 Langenhagen(DE)**

(54) **Spannbackenwechselvorrichtung.**

(57) Zum Wechseln der Aufsatzspannbacken eines Werkstückspannfutters mit einer Werkstückhandhabungsvorrichtung wird vorgeschlagen, die die Aufsatzspannbacken tragende Palette (1) über eine Adapterplatte (11) an Stelle eines Werkstückgreifers in die Werkstückhandhabungsvorrichtung einzuwechseln. Zwischen Adapterplatte (11) und Palette (1) ist eine Fluchtungsfehler ausgleichende Verbindung vorgesehen.

Fig. 1

EP 0 215 353 A2

## Spannbackenwechselvorrichtung

Die Erfindung betrifft eine Spannbackenwechselvorrichtung für Aufsatzspannbacken an Grundbacken enthaltenden Spannfuttern von Werkzeugmaschinen mit einer in Spindelachsrichtung der Werkzeugmaschine verfahrbaren Werkstückwechseleinrichtung, wobei die Aufsatzspannbacken satzweise auf Paletten angeordnet sind.

Derartige Paletten zur Aufnahme von Aufsatzspannbacken sind in DE -OS 33 45 012 beschrieben. Um die Betriebssicherheit zu gewährleisten und Späne und Kühlmittel von den Verbindungsteilen fern zu halten, sind die Kupplungselemente und Führungsflächen sehr eng toleriert. Zur Übergabe der Aufsatzspannbacken an das Spannfutter sind diese daher mit Einführungsschrägen versehen. Die Veröffentlichung enthält den Hinweis, daß der automatische Wechsel mit einem Handhabungsgerät erfolgen kann.

Die Handhabung der Palette mit einer Werkstückwechseleinrichtung ist aus "moderne Fertigung", Mai 1985, Seiten 16-18, bekannt. Die Palette ist dazu mit einem Zapfen versehen, an dem sie durch die Werkstückgreifer gehalten werden kann. Es wird darauf hingewiesen, daß zur Übergabe und zum Einrasten der Aufsatzspannbacken in das Spannfutter eine einwandfreie Planlage der Palette erforderlich ist. Diese Planlage wird erreicht, indem die Palette durch den Maschinenreitstock oder den Werkzeugrevolver zentrisch gegen das Spannfutter gepreßt wird.

Die Positioniergenauigkeit der Werkstückwechseleinrichtung ist zu gering, um die Plananlage der Palette zu erreichen. Sie wird dadurch verschlechtert, daß sowohl die Maschine als auch das Handhabungssystem durch unterschiedlich starke Temperaturschwankungen ihre relative Lage zueinander ständig ändern.

Infolge der für das Zusammenfügen der eng tolerierten, miteinander in Eingriff zu bringenden Teile erforderlichen Kraft unterliegt das Werkstückhandhabungssystem zusätzlich elastischen Deformationen, die eine Planlage der Palette verhindern können.

Insbesondere die Elastizität des Werkstückgreifers selbst, sowie die Positionsgenauigkeit des Zapfens der Palette im Werkstückgreifer sind für die Ungenauigkeiten verantwortlich.

Die Aufgabe der vorliegenden Erfindung besteht darin, eine Spannbackenwechselvorrichtung zu schaffen, bei der die Planlage der Palette und die zum Zusammenfügen der Grund-und Aufsatzspannbacken erforderliche Anpreßkraft durch die Werkstückhandhabungseinrichtung gewährleistet ist.

Die Aufgabe wird durch die Merkmale des Hauptanspruchs gelöst.

Durch die Aufnahme der Palette direkt im Tragarm einer Werkstückwechseleinrichtung über eine Adapterplatte wird das schwächste Glied der Wirkungskette -der Werkstückgreiferausgeschieden. Damit kann die Fixierung zwischen Palette und Werkstückwechseleinrichtung aber auch viel genauer erfolgen als dies zwischen einem Zapfen und einem Werkstückgreifer möglich ist.

Die erforderliche Anpreßkraft wird erheblich verringert, wenn die Palette eine Ausgleichsbewegung beim Einschieben der Aufsatzspannbacken in das Spannfutter auszuführen in der Lage ist. Es findet kein Verzwängen in den Führungen mehr statt, so daß die Planlage der Palette bei minimalem Kraftaufwand erreicht wird.

Bevor die Aufsatzspannbacke in das Spannfutter eingeführt ist, darf die schwimmende Lagerung der Palette nicht zu einer Positionsungenauigkeit gegenüber dem Werkstückhandhabungssystem führen. Daher wird die feste Aufnahme der Palette erst freigegeben, wenn eine Anpreßkraft auftritt.

Die Erfindung wird anhand eines in den Zeichnungen dargestellten Ausführungsbeispiels näher beschrieben; es zeigen :

Fig. 1 einen Schnitt durch die Palettenaufnahme

Fig. 2 den Schnitt gemäß II-II der Fig. 1

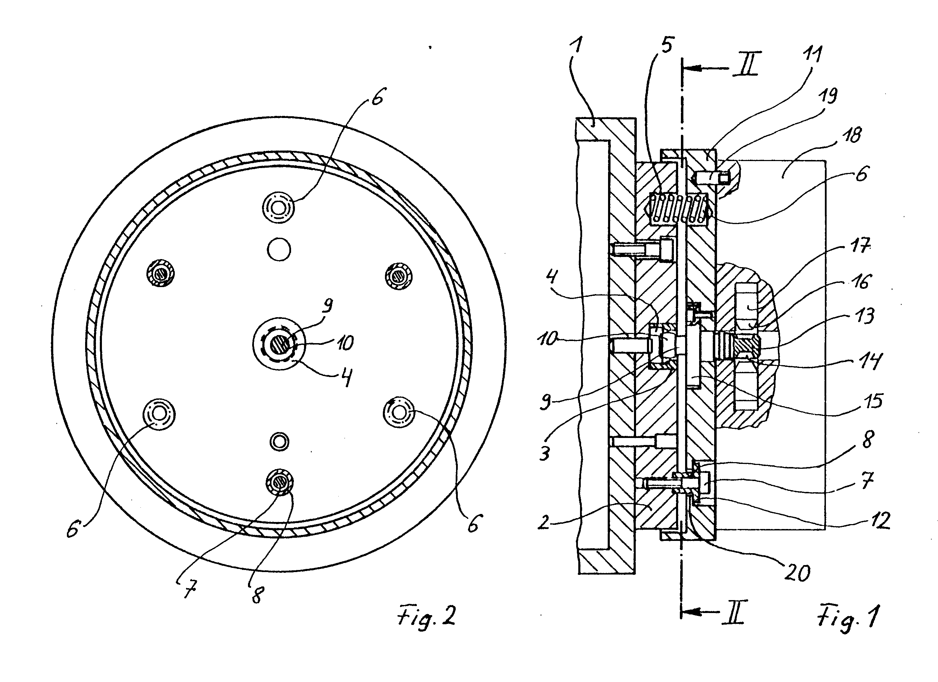

In Fig. 1 ist eine Aufsatzspannbackenpalette 1 angedeutet, wie sie z.B. aus DE-OS 33 45 012 bekannt ist. Die Palette 1 ist mit einer Platte 2 verschraubt, in deren Mitte eine Buchse 3 mit einer abgesetzten Bohrung 4 eingesetzt ist. Der Übergang von dem kleineren Bohrungsdurchmesser zum größeren ist kegelig. In die Platte 2 sind auf einem Kreis verteilt abwechselnd Bohrungen 5 für Federn 6 mit Schrauben 7 für Distanzbuchsen 8 angeordnet. In die mittige Bohrung 4 dringt ein Bolzen 9, der einen balligen Kopf 10 trägt. Bolzen 9 und Schrauben 7 verbinden die Platte 2 mit der Adapterplatte 11. Die Platte 2 und die Adapterplatte 11 werden durch die Federn 6 so weit auseinandergedrückt, wie die Distanzbuchsen 8 dies erlauben. Die Distanzbuchsen 8 liegen dabei mit dem Bund 12 an einer ebenen Fläche der Adapterplatte 11 an, während der Kopf 10 des Bolzens 9 in dem kegeligen Übergang der Bohrung 4 anliegt.

Der Bolzen 10 ist hier gleichzeitig als Spannzapfen 13 mit zwei einander gegenüberliegenden kegeligen Bohrungen 14 ausgebildet und wird durch einen Flansch 15 in der Adapterplatte 11 gehalten. In die kegeligen Bohrungen 14 greifen Ansätze 16 von Spannbolzen 17. Ein Spannmechanismus für die Adapterplatte 11 im Tragarm 18 der Werkstückhandhabungseinrichtung ist z.B. in DE-Patent-Anmeldung 35 21 821 beschrieben und braucht deshalb hier nicht näher erläutert zu werden. Die Adapterplatte 11 liegt an dem Tragarm 18 plan an und wird durch einen Stift 19 gegen Verdrehung gesichert.

Aus Fig. 2 ist die Verteilung der Federn 6 und der von den Schrauben 7 gehaltenen Distanzbuchsen 8 zu erkennen. Eine symmetrische Anordnung fördert die sichere Halterung der Palette 1.

Die Federn 6 sorgen dafür, daß der Abstand zwischen Platte 2 und Adapterplatte 11 sich unter den Schwer-und Beschleunigungskräften nicht verändert. Erst wenn die Aufsatzspannbacken mit dem Spannfutter in Berührung kommen, werden die Federn 6 zusammengedrückt, sO daß der Kopf 10 des Bolzens 9 sich von dem kegeligen Übergang der Bohrung 4 abhebt. Gleichzeitig entsteht auch zwischen dem Bund 12 der Distanzbuchsen 8 und deren Anlageflächen ein Abstand. Da die Distanzbuchsen 8 mit Spiel in den Bohrungen 20 sitzen, kann die Palette1 nun sowohl geringe Kipp-als auch Drehbewegungen ausführen. Die Plananlage der Palette 1 an dem Spannfutter ist damit gewährleistet, ohne daß von der Werkstückhandhabungseinrichtung große Kräfte aufgebracht werden müssen.

## Ansprüche

1. Spannbackenwechselvorrichtung für Grund- und Aufsatzspannbacken enthaltende Werkstückspannfutter von Werkzeugmaschinen, bei der die Aufsatzspannbakken satzweise auf Paletten (1) gehalten sind, mit einer in Spindelachsrichtung der Werkzeugmaschine verfahrbaren Werkstückwechseleinrichtung, dadurch gekennzeichnet, daß die Paletten (1) mit einer Adapterplatte (11) verbunden sind, die an Stelle eines Werkstückgreifers in die Werkstückwechseleinrichtung einwechselbar ist.

2. Spannbackenwechselvorrichtung nach Anspruch 1, dadurch gekennzeichnet, daß die Palette - (1) gegenüber der Adapterplatte (11) eine - schwimmende Aufnahme findet.

3. Spannbackenwechselvorrichtung nach Anspruch 1 und 2, dadurch gekennzeichnet, daß die Verbindung zwischen Adapterplatte (11) und Palette (1) von einer festen in eine schwimmende Aufnahme überführbar ist.

4. Spannbackenwechselvorrichtung nach Anspruch 1 und 2, dadurch gekennzeichnet, daß zwischen Palette (1) und Adapterplatte (11) ein Abstand besteht, der von elastisch verformbaren Elementen (6) und mit Spiel versehenen Bolzen (9) überbrückt wird.

5. Spannbackenwechselvorrichtung nach Anspruch 1 und 4, dadurch gekennzeichnet, daß einer der Bolzen (9) mittig an der Adapterplatte (11) befestigt und ballig ausgebildet ist und sich in eine kegelige Bohrung (4) der Palette (1) erstreckt, während mindestens ein weiterer Bolzen einen Bund (12) aufweist, der zeitweilig an der von der Palette (11) abgewandten Seite der Adapterplatte - (11) anliegt.

Fig. 1

Fig. 2